Europäisches Patentamt

European Patent Office

Office européen des brevets

(11) Publication number: **0 425 800 A1**

# EUROPEAN PATENT APPLICATION

(21) Application number: 90117615.6

(22) Date of filing: **13.09.90**

(51) Int. Cl.⁵: **B29B 17/02**

(30) Priority: **01.11.89 NL 8902696**

(43) Date of publication of application:
**08.05.91 Bulletin 91/19**

(84) Designated Contracting States:
**DE ES FR GB IT NL**

(71) Applicant: **GENERAL ELECTRIC COMPANY**
**1 River Road**
**Schenectady, NY 12345(US)**

(72) Inventor: **Stricker, Urban**
**General Electric Plastics B.V., P.O. Box 117**
**NL-4600 AC Bergen op Zoom(NL)**
Inventor: **Kaufer, Helmut**
**General Electric Plastics B.V., P.O. Box 117**
**NL-4600 AC Bergen op zoom(NL)**

(74) Representative: **Schüler, Horst, Dr. et al**
**General Electric Praunheimer Landstrasse**
**50**
**W-6000 Frankfurt 90(DE)**

(54) **Method of and device for separating synthetic resin foam from rigid, thin-walled articles lined with synthetic resin foam.**

(57) The invention relates to a method of separating synthetic resin foam from rigid articles by subjecting the article to a deformation treatment.

The invention also relates to a device suitable for practicing the invention.

Fig. 3

EP 0 425 800 A1

# METHOD OF AND DEVICE FOR SEPARATING SYNTHETIC RESIN FOAM FROM RIGID, THIN-WALLED ARTICLES LINED WITH SYNTHETIC RESIN FOAM

The invention relates to a method of separating synthetic resin foam from rigid, thin-walled articles lined with synthetic resin foam.

Rigid, thin-walled articles lined with synthetic resin foam are, for example, in the form of motorcar bumpers, which are built up, for example, from a comparatively thin, rigid shell of polycarbonate filled with polyurethane foam. Another example of such an article is, by way of example, a door or a wall of a refrigerator which may be manufactured from a thin metal sheet having provided thereon a layer of a synthetic resin foam.

When such articles have reached the end of their useful life, it is desirable that the various materials from which such a composite member has been built up can be separated from each other to enable each of these materials to be processed in a manner which is as efficacious as possible or to be used for other purposes.

It is the object of the invention to provide a method in which a separation of materials forming such a composite member can be realised in an efficacious and economical manner.

According to the invention this object is achieved in that the article lined with the synthetic resin foam is subjected with the synthetic resin foam to a deformation treatment, after which any synthetic resin foam still bonding to the article is removed from the article by means of scraping members.

It has been found surprisingly that during the deformation of an article lined with synthetic resin foam, at least a major part of the synthetic resin foam detaches automatically from the rigid, thin-walled article. The remaining synthetic resin foam still bonded to the article can then be removed from the article at least for the greater part by means of suitable scraping and/or brushing members.

For the deformation of the article may be considered both the exertion of tensile forces and/or pressure forces in different directions on the article, as well as bending and/or torsioning about imaginary axes extending in different directions. The choice of the manner in which the article is to be deformed will also depend on the design of the article and the foam bonded thereto.

It is noted that from DE-C-204962 there is known a device for removing the rubber from the linen layers of a tire. According the teaching of said patent the tire is cut in a transverse direction and then passed through rollers in order to flatten the tire. The flattened portion of the tire is passed below a fast rotation drum provided with knifes for cutting the rubber from the linen layers. Flattening a tire as indicated in said reference could perhaps be done with the tires used in 1907 (date of the patent) however seems not to be possible with the modern tires.

A more recent solution for removing the rubber from the crown portion of a tire has been disclosed in US-A-4 840 316. According said reference the side walls of a tire are removed leaving the crown portion of the tire. Said crown portion is presented in a flattened yet highly stressed condition to rotary cutting blades.

So from said references it could be derived only that for removing the rubber of a tire from parts of the carcass of said tire the rubber and the carcass portions adhered to said rubber has to be presented in a flattened condition to rotating cutting means which have to cut all the rubber from the relative carcass portions.

However any indication with resprect to the surprising feature according the invention that an effective loosening of synthetic resin of foam from rigid thin walled articles can be obtained by deforming said object whereby a substantially amount of the synthetic resin foam will be seperated from the article only by the deforming step whilst thereafter the remainder of the foam can be easily teared off of the article by means of scraper means can not be derived from said references.

According to a further aspect of the invention a particularly efficacious device for carrying out the method according to the invention is obtained if the device comprises two pressure members between which the article lined with synthetic foam can be deformed, as well as scraping members accommodated after the said pressure members, wherein the scraping members are formed by projecting arms which are connected to a further roller which is rotable about an axis of rotation which extends parallel to the axes of rotation of the rollers producing the deformation of the articles.

In this manner a device can be obtained which is simple of construction and which requires comparatively little maintenance, and by means of which a separation between the rigid, thin-walled articles and the synthetic resin foam can be produced in a rapid and efficacious manner.

The invention will now be described in greater detail with reference to a possible embodiment of a device according to the invention shown diagrammatically in the accompanying figures.

Figure 1 is a diagrammatic side elevation of the device in a starting position.

Figure 2 is a side elevation of the device shown in Figure 1 in the operating condition.

Figure 3 is a cross-sectional view, partly in a side elevation taken on the line III-III in Figure 2, of the device shown in Figure 2.

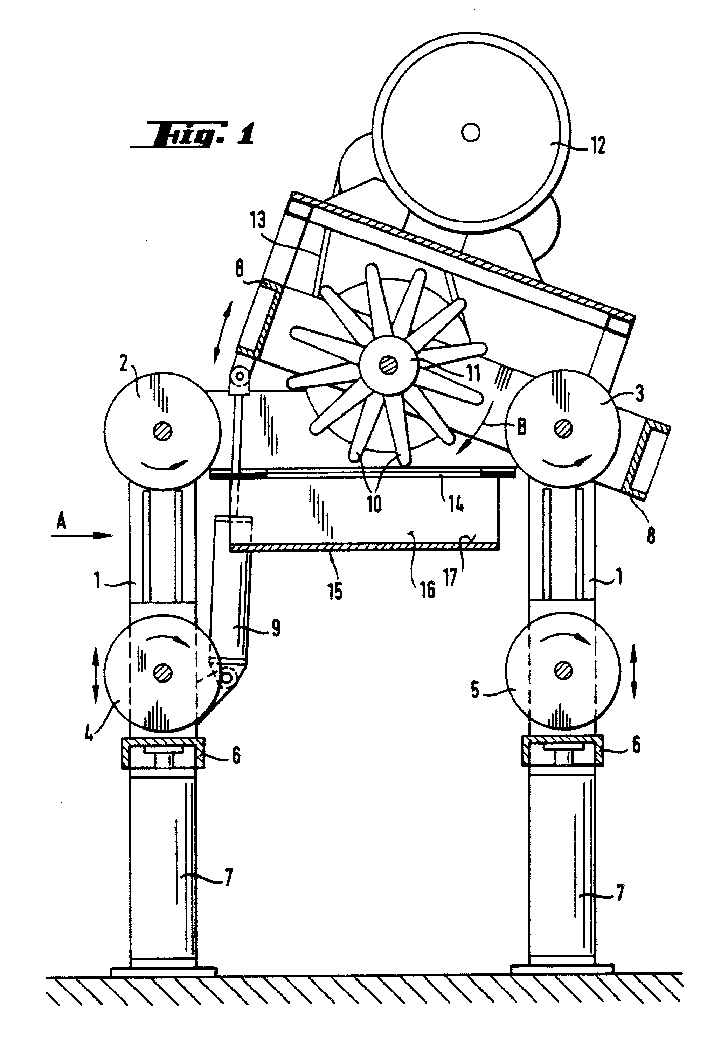

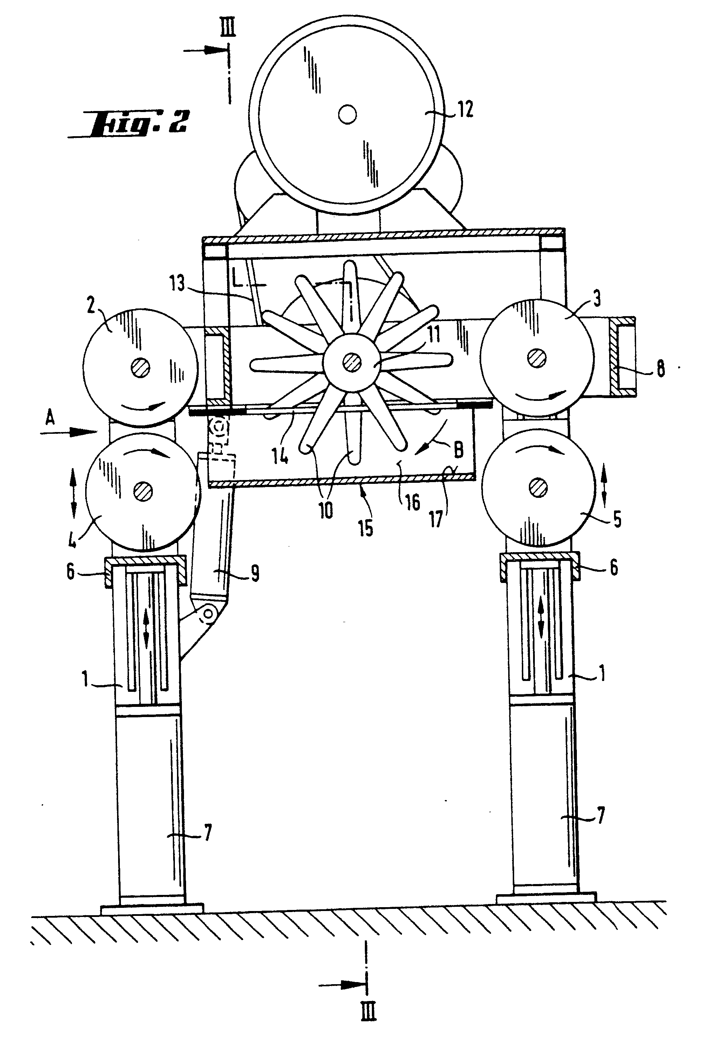

The device shown in Figures 1-3 comprises four columns 1 arranged in the corners of a square. Each time two columns support rollers 2 and 3, respectively, which are accommodated near the upper ends of the said columns and can be rotated about a horizontal axis of rotation. It will be obvious from Figures 1 and 2 that the rollers are journalled parallel to each other and at the same level in the chassis of the device.

Rollers 4 and 5, respectively, extending parallel to the rollers 2 and 3 are accommodated between each pair of columns 1 and below the said rollers 2 and 3. The said rollers 4 and 5 are journalled in U-shaped yokes 6 so as to be rotable and can be moved up and down by means of adjusting cylinders 7.

At least the rollers 2 and 3 and/or the rollers 4 and 5 can be rotated by means of driving members not further shown. A frame-shaped chassis part 8 can be swung with respect to the remaining part of the chassis about a pivot axis which coincides with the axis of rotation of the roller 3. The swinging of the said frame-shaped chassis part can be produced by means of an adjusting cylinder 9 which is provided between the said chassis part and the remaining part of the chassis.

A roller 11 comprising radially projecting arms or scraping members is journalled in the chassis part so as to be rotatable about an axis of rotation which extends parallel to the axes of rotation of the rollers 2 and 3. The roller 11 is accommodated between the rollers 2 and 3, as may be seen from figures 1 and 2. The roller 3 can be rotated by means of a driving motor 12 provided on the frame-shaped chassis part 8 which is coupled to the roller 11 via a belt transmission 13.

A grating 14 is accommodated between the rollers 2 and 3 so as to be lower than the axes of rotation of the rollers 2 and 3 in a horizontal plane and slightly higher than the lowest points of the said rollers. The grating 14 is constructed so that during the downward movement of the roller 11 from its highest position shown in Figure 1 to its lowest position shown in Figure 2 by means of the cylinder 9, the arms or scraping members 10 are capable of moving through apertures provided in the grating, which apertures have dimensions such that the roller 11 in the position shown in Figure 2 can also be rotated without the arms 10 conflicting with the grating 14.

Below the grating 14 between the rollers 2 and 3 a collecting and guiding plate 15 is arranged which comprises a portion 16 descending from one end of the grating and an upper edge of which is situated near a boundary edge of the grating 14 extending between the two rollers 2 and 3. An end of a further portion 17 of the guiding member adjoins the lower end of the said portion 16, which portion 17 extends in a slightly down-slanting manner below the grating 14 and below the rollers 11 in the direction of the other side of the device and then changes into a strongly descending portion 18 the lower end of which is situated near the outside of the chassis of the device.

A rigid, thin-walled article, for example, a motor-car bumper or a refrigerator door or the like, which is lined with a layer of synthetic resin foam, may now be inserted between the two spaced-apart rollers 2 and 4 to the right in the direction of the arrow A as viewed in Figure 1. When the front end of the article is situated between the rollers 2 and 4, which can be observed, for example, by means of a limit switch, a photoelectric cell or the like, the adjusting cylinders 7 may be actuated to raise the rollers 4 and 5 from the position shown in Figure 1 to the position shown in Figure 2, the above-mentioned front end of the article in question being clamped and deformed between the two rollers 2 and 4. The rollers 2 and/or 4 and 3 and/or 5 will be made to rotate in such a manner that the article clamped between the rollers 2 and 4 will be moved in the direction of the arrow A to the right as viewed in Figure 1. The article deformed by the rollers 2 and 4 will be moved over the portion 17 of the guiding plate 15.

As a result of the deformation and compression, respectively, of the article, for example, a motor-car bumper, a part of the foam will already be torn loose.

Meanwhile, the roller 11 comprising scraping members or projecting arms 10 has also been lowered from the Figure 1-position to the Figure 2 position, while the said roller is simultaneously made to rotate, preferably in the direction of the arrow B, so that the ends of the arms or scraping members 10 which contact an article to be treated, move in a direction opposite to the direction of movement of the article to be treated in the direction of the arrow A.

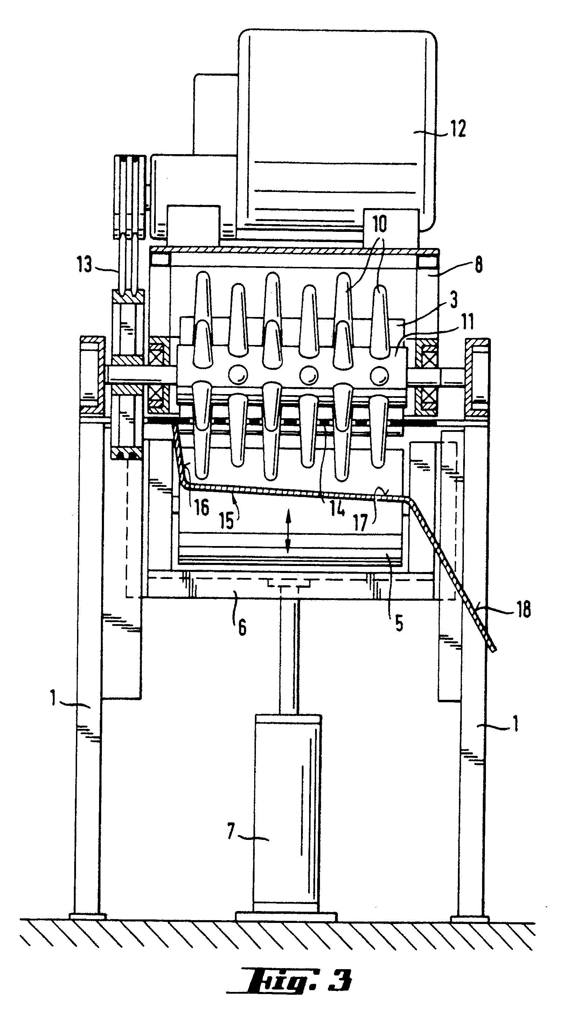

Any synthetic resin foam still adhering to the article to be treated will then be torn loose and scraped off, respectively, from the article by means of the rotating scraping members. The detached synthetic resin foam will land on the guiding plate 15 at least for the greater part and, viewed in Figure 3, slide to the right along the portions 17 and 18 of the guiding plate to be collected, for example, in a tray or the like arranged below the end of the portion 18 of the guiding plate 15.

The leading end of the article to be treated will at a given instant land between the oppositely located rollers 3 and 5 which ensure a further movement of the article in the direction of the arrow A, also when the trailing end of the article has passed the rollers 2 and 4.

It has been found in practice that, by using the above-described device, by means of which articles lined with synthetic resin foam are first subjected to a deformation, in particular a compression, and are then worked with scraping members, at least the greater part of the synthetic resin foam can be removed from the rigid, thin-walled article in a cheap and effective manner, so that the various materials can be subjected individually to a recycling process or the like.

If desired, the device may be provided with a rotating brushing member which, viewed in the direction of movement of the arrow A of the articles to be treated, may be accomodated after the roller comprising the scraping members or arms 10 before or after the cooperating rollers 3 and 5. Remaining parts, if any, of synthetic resin foam may then still be brushed from the rigid, thin-walled articles.

All patent (applications) mentioned herein are herewith incorporated by reference.

## Claims

1. A method of separating synthetic resin foam from rigid, thin-walled articles lined with synthetic resin foam, characterised in that the article lined with synthetic resin foam is subjected with the synthetic resin foam to a deformation treatment, after which any synthetic resin foam still bonding to the articles is removed from the articles by means of scraping members.

2. A method as claimed in Claim 1, characterised in that the articles are deformed by exerting pressure and/or tensile forces on the articles.

3. A method as claimed in Claim 1 or 2, characterised in that after subjecting the articles to a treatment by means of scraping members, the articles are subjected to a treatment by means of brushing members.

4. A device, in particular for carrying out the method as claimed in any of the preceding Claims, characterised in that the device comprises two pressure members between which the articles lined with synthetic resin foam can be deformed, as well as scraping members accommodated after the said pressure members, wherein the scraping members are formed by projecting arms which are connected to a further roller which is rotable about an axis of rotation which extends parallel to the axes of rotation of the rollers producing the deformation of the articles.

5. A device as claimed in Claim 4, characterised in that the pressure members are formed by two oppositely located rollers.

6. A device as claimed in Claim 5, characterised in that the rollers can be adjusted with respect to each other in a direction transverse to the axes of rotation of the rollers.

7. A device as claimed in Claim 4, characterised in that the roller comprising the scraping members can be adjusted in height.

8. A device as claimed in Claim 4 or 7, characterised in that a grating is accommodated below the roller comprising the scraping members, through which grating the scraping members can be moved, while a guiding plate is arranged below the grating, all this in such a manner that articles moved by rollers producing the deformation of the article can be moved between the grating and the guiding plate.

9. A device as claimed in any of the Claims 4-8, characterised in that the scraping members are arranged between two pair of cooperating rollers by means of which an article. to be treated can be moved through the device.

10. A device as claimed in any of the preceding Claims, characterised in that, viewed in the direction of movement of the articles to be treated through the device, brushing members are accommodated after the scraping members.

Fig. 1

Fig. 2

**EP 0 425 800 A1**

Fig. 3

7

**European Patent Office**

**EUROPEAN SEARCH REPORT**

Application Number

**EP 90 11 7615**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,D | US-A-4 840 316   (R.L. BARCLAY) <br> * Figures 1-9 * <br> — — — | 1,2,4-8 | B 29 B <br> 17/02 |
| X,D | DE-C-2 049 62   (J. KOHAUT) <br> * Figures 1,2 * <br> — — — | 1,2,4 | |
| A | EP-A-0 120 527   (TNO) <br> * Figures 1,2; claims * <br> — — — — — | 1 | |

| TECHNICAL FIELDS SEARCHED (Int. Cl.5) |
|---|
| B 29 B <br> B 03 B <br> B 09 B |

The present search report has been drawn up for all claims

| Place of search | Date of completion of search | Examiner |
|---|---|---|
| The Hague | 03 December 90 | KUSARDY R. |